# EUROPEAN PATENT SPECIFICATION

(11) **EP 4 266 711 B1**
(45) Date of publication and mention of the grant of the patent: **02.12.2026**
(21) Application number: 21908735.0
(22) Date of filing: 08.10.2021
(51) Int. Cl.: H04W 4/80, H04W 8/00

(54) **WIRELESS COMMUNICATION METHOD AND SYSTEM**
VERFAHREN UND SYSTEM ZUR DRAHTLOSEN KOMMUNIKATION
PROCÉDÉ ET SYSTÈME DE COMMUNICATION SANS FIL

(30) Priority: 22.12.2020 CN 202011528924
(43) Date of publication of application: 25.10.2023
(73) Proprietor: GUANGDONG OPPO MOBILE TELECOMMUNICATIONS CORP., LTD., Dongguan, Guangdong 523860 (CN)
(72) Inventor: XU, Chaojie, Dongguan, Guangdong 523860 (CN)
(74) Representative: Kraus & Lederer PartGmbB
(86) International application number: PCT/CN2021/122647
(87) International publication number: WO 2022/134734

(56) References cited:
- WO-A1-2020/213959
- WO-A1-2020/246768
- CN-A- 110 933 616
- CN-A- 111 294 783
- CN-A- 111 464 993
- CN-A- 111 629 369
- US-A1- 2017 374 533
- US-A1- 2022 201 452
- US-A1- 2022 256 314

## Description

This application claims a priority to Chinese Patent Application No. 202011528924.0, entitled "WIRELESS COMMUNICATION METHOD AND SYSTEM", filed with China National Intellectual Property Administration on December 22, 2020.

### FIELD

The present disclosure belongs to the technical field of electronic device, and more particularly, to a wireless communication method and system.

### BACKGROUND

With the development of technology, more and more electronic devices can be interconnected with each other. The Bluetooth protocol is generally employed to connect different electronic devices to each other. However, a Bluetooth protocol-based connection known in the related art may have various problems, which in turn lead to a variety of problems in the connection of different electronic devices using Bluetooth.
US 20170374533 A1 discloses a method for performing back channel communication with the broadcasting device on a contention basis while maintaining the connectionless mode. The scanner receives a broadcast message from a broadcasting device in a connectionless mode.
WO 2020213959 A1 discloses a method for receiving audio data using BLE. The method includes receiving, from a server device, a first advertisement message including information for providing an audio streaming service and a second advertisement message including synchronization information for synchronization between the client device and the server device; receiving, from the server device, a third advertisement message including transmission timing information of the audio data related to the audio streaming service.
WO 2020246768 A1 discloses a method by which a second device performs scan offloading on a first device in a wireless communication system. A client with relatively sufficient power may perform remote scanning on behalf of the server with limited power, thereby reducing power consumption of the server. For example, the client may obtain broadcast source information of broadcast sources #1, #2, #3, ... For example, the client may collect information from up to 10 broadcast sources.
CN111464993A discloses a pairing method between binaural Bluetooth earphones, including: in a preset triggering state, a first earphone in the binaural Bluetooth earphones broadcasts a first pairing request on a predefined radio frequency channel, and carries out the scanning on the predefined radio frequency channel; and when the first earphone receives a first pairing response returned by a second earphone in the binaural Bluetooth earphone in response to receiving the first pairing request through scanning, the first earphone and the second earphone perform pairing confirmation.

### SUMMARY

Embodiments of the present disclosure provide a wireless communication method and apparatus, a storage medium, and an electronic device, capable of reducing power consumption of the electronic device.

In a first aspect, the embodiments of the present disclosure provide a wireless communication method applied in a wireless communication system. The wireless communication system includes a first electronic device and a second electronic device. The method includes: transmitting, by the first electronic device via a primary channel, a primary channel advertising packet to the second electronic device, to allow the second electronic device to parse an E-UTRA Absolute Radio Frequency Channel Number, EARFCN, of a first data channel and a first time offset, and obtain a first time point for transmitting an auxiliary advertising packet; transmitting, by the first electronic device via the first data channel, the auxiliary advertising packet to the second electronic device at the first time point, to allow the second electronic device to parse an EARFCN of a second data channel and a second time offset, and obtain a second time point for transmitting a first periodic advertising signal; opening, by the second electronic device, a reception window of the second electronic device based on the second time point, to establish a first synchronization link connection with the first electronic device based on the first periodic advertising signal; and; and receiving, by the first electronic device, a second periodic advertising signal transmitted by the second electronic device, to establish a second synchronization link of the first electronic device with the second electronic device.

In a second aspect, the embodiments of the present disclosure provide a wireless communication system including a first electronic device and a second electronic device. The first electronic device is configured to transmit, via a primary channel, a primary channel advertising packet to the second electronic device, to allow the second electronic device to parse an EARFCN of a first data channel and a first time offset, and obtain a first time point for transmitting an auxiliary advertising packet; transmit, via the first data channel, the auxiliary advertising packet to the second electronic device at the first time point, to allow the second electronic device to parse an EARFCN of a second data channel and a second time offset, and obtain a second time point for transmitting a first periodic advertising signal. The second electronic device is configured to open a reception window of the second electronic device based on the second time point, to establish a first synchronization link connection with the first electronic device based on the first periodic advertising signal. The first electronic device is further configured to receive a second periodic advertising signal transmitted by the second electronic device to establish a second synchronization link. The first electronic device implements audio signal transmission with the second electronic device via the first synchronization link and the second synchronization link subsequent to an establishment of a synchronization connection between the first electronic device and the second electronic device.

### BRIEF DESCRIPTION OF THE DRAWINGS

Technical solutions of the present disclosure and their advantageous effects will become apparent through the following detailed description of specific embodiments of the present disclosure in conjunction with the accompanying drawings.
FIG. 1 is a first flowchart of a wireless communication method according to an embodiment of the present disclosure.
FIG. 2 is a schematic diagram of a scenario of binaural communication of True Wireless Stereo (TWS) earphones according to an embodiment of the present disclosure.
FIG. 3 is a second flowchart of a wireless communication method according to an embodiment of the present disclosure.
FIG. 4 is a schematic diagram of a scenario of establishing a synchronization link for TWS earphones according to an embodiment of the present disclosure.
FIG. 5 is a schematic diagram of an interaction scenario of a synchronization link confirmation according to an embodiment of the present disclosure.
FIG. 6 is a schematic diagram of an interaction scenario of data transmission and reception of TWS earphones according to an embodiment of the present disclosure.
FIG. 7 is a third flowchart of a wireless communication method according to an embodiment of the present disclosure.
FIG. 8 is a schematic diagram of an interaction scenario of updating a periodic advertising interval of TWS earphones according to an embodiment of the present disclosure.
FIG. 9 is a schematic diagram of an interaction scenario of updating a physical layer of TWS earphones according to an embodiment of the present disclosure.
FIG. 10 is a schematic diagram of an interaction scenario of disconnecting a synchronization link of TWS earphones according to an embodiment of the present disclosure.
FIG. 11 is a schematic diagram of air interface packet timing of TWS earphones according to an embodiment of the present disclosure.
FIG. 12 is a schematic structural diagram of a wireless communication apparatus according to an embodiment of the present disclosure.
FIG. 13 is a schematic structural diagram of an electronic device according to an embodiment of the present disclosure.
FIG. 14 is another schematic structural diagram of an electronic device according to an embodiment of the present disclosure.
FIG. 15 is a schematic structural diagram of a wireless communication system according to an embodiment of the present disclosure.

### DETAILED DESCRIPTION

Throughout the accompanying drawings, same components are indicated by the same component reference numerals. The principles of the present disclosure are illustrated by way of example implementations in an appropriate computing environment. The following description is based on the illustrated specific embodiments of the present disclosure, but should not be construed as limiting other specific embodiments of the present disclosure that are not elaborated herein.

It should be understood that an executive subject of the embodiments of the present disclosure may be an electronic device such as Bluetooth earphones, a Bluetooth speaker, a smartphone, or a tablet computer.

The embodiments of the present disclosure provide a wireless communication method applied in a wireless communication system. The wireless communication system includes a first electronic device and a second electronic device. The method includes: transmitting, by the first electronic device, a first periodic advertising signal to the second electronic device, to establish a first synchronization link of the second electronic device with the first electronic device; and receiving, by the first electronic device, a second periodic advertising signal transmitted by the second electronic device, to establish a second synchronization link of the first electronic device with the second electronic device.

In some embodiments, the action of transmitting, by the first electronic device, the first periodic advertising signal to the second electronic device, to establish the first synchronization link of the second electronic device with the first electronic device can include: determining a transmission time at which the first periodic advertising signal is transmitted by the first electronic device to the second electronic device; and opening a reception window of the second electronic device based on the transmission time, to enable the second electronic device to establish the first synchronization link connection with the first electronic device based on the first periodic advertising signal.

In some embodiments, the method may further include: advertising, by each of the first electronic device and the second electronic device, a synchronization confirmation packet to each other, to complete a confirmation process of the first synchronization link and the second synchronization link.

In some embodiments, the method may further include: advertising, by the first electronic device, data to the first synchronization link of the second electronic device, and obtaining, by the second synchronization link of the first electronic device, a response signal advertised by the second electronic device.

In some embodiments, the method may further include: updating a periodic advertising interval of the first synchronization link and the second synchronization link.

In some embodiments, the action of updating the periodic advertising interval of the first synchronization link and the second synchronization link can include: transmitting, by the first electronic device via a first periodic advertising channel, an update packet to the first synchronization link of the second electronic device, in which the update packet includes a target periodic advertising interval, a target time offset, and a multiplier; obtaining, by the second synchronization link of the first electronic device via a second periodic advertising channel, an update confirmation packet from the first synchronization link of the second electronic device; transmitting, at a target time point, data to the first synchronization link of the second electronic device based on the target periodic advertising interval, in which the target time point is obtained based on the target time offset and the multiplier; and obtaining, by the second synchronization link of the first electronic device via the second periodic advertising channel, a corresponding response signal from the first synchronization link of the second electronic device.

In some embodiments, the method may further include: updating a physical layer of the first synchronization link and the second synchronization link.

In some embodiments, the action of updating the physical layer of the first synchronization link and the second synchronization link can include: transmitting, by the first electronic device via a first periodic advertising channel, a physical layer update packet to the first synchronization link of the second electronic device, in which the physical layer update packet includes a target physical layer, a target time offset, and a multiplier; obtaining, by the second synchronization link of the first electronic device via a second periodic advertising channel, an update confirmation packet from the first synchronization link of the second electronic device; transmitting, at a target time point, data to the first synchronization link of the second electronic device based on the target physical layer, in which the target time point is obtained based on the target time offset and the multiplier; and obtaining, by the second synchronization link of the first electronic device via the second periodic advertising channel, a corresponding response signal from the first synchronization link of the second electronic device.

In some embodiments, the method may further include: disconnecting the first synchronization link and the second synchronization link.

In some embodiments, the action of disconnecting the first synchronization link and the second synchronization link can include: transmitting, by the first electronic device via a first periodic advertising channel, a disconnection request signal to the first synchronization link of the second electronic device, to disconnect the first synchronization link of the second electronic device; and obtaining, by the second synchronization link of the first electronic device via a second periodic advertising channel, a disconnection confirmation packet from the first synchronization link of the second electronic device, and disconnecting the second synchronization link of the first electronic device.

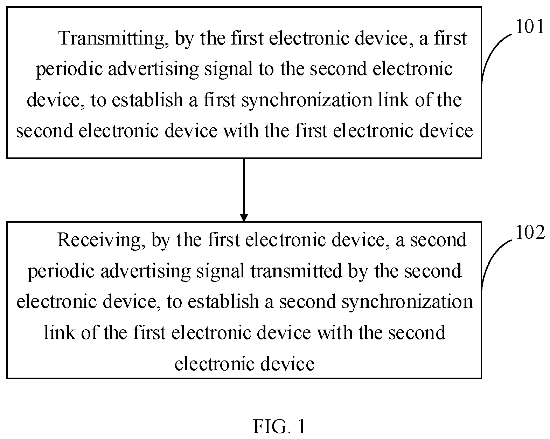

FIG. 1 is a first flowchart of a wireless communication method according to an embodiment of the present disclosure. The wireless communication method is applied in a wireless communication system. The wireless communication system includes a first electronic device and a second electronic device. As illustrated in FIG. 1, the wireless communication method can include the following actions in blocks.

At block 101, the first electronic device transmits a first periodic advertising signal to the second electronic device, to establish a first synchronization link of the second electronic device with the first electronic device.

With the development of technology, electronic devices such as Bluetooth earphones are increasingly involved in people's lives. Users often use Bluetooth earphones to answer phone calls, listen to music, etc. Bluetooth earphones such as TWS earphones are developed in two main technical directions, i.e., based on Bluetooth (BT) and Bluetooth low energy (BLE), respectively. Representative solutions of Bluetooth Classic are a snooping solution of a first manufacturer and a snooping and retransmission solution of a second manufacturer. A representative solution of Bluetooth low energy Audio (BLE Audio) is a Corporate Identity System (CIS) solution of a third manufacturer. These two technical directions both involve an issue of binaural information synchronization. Main technical solutions to binaural information synchronization include Bluetooth Asynchronous Connectionless Link (BT ACL) and Bluetooth low energy Asynchronous Connectionless Link (BLE ACL). The binaural ACL is used to synchronize clocks, frequency bands, data packets etc.

For example, the use of Bluetooth earphones may involve the issue of binaural information synchronization. As an example, information may be synchronized based on ACL. However, since a slave device in the BT ACL always tries to receive packets in as many slots as possible, scheduling is not very flexible, which can be easily interrupted in a multi-service scenario, thereby resulting in problems such as retransmission. In addition, it is more power consuming for the slave device. The connection is established only after an Acknowledge Character (ACK) of each packet of data in BT ACL is required, and it is inefficient in a fast packet transmission and reception scenario.

In the embodiments of the present disclosure, a synchronization link between the first electronic device and the second electronic device can be established. For example, the first electronic device transmits the first periodic advertising signal to the second electronic device, and the second electronic device establishes a synchronization link connection with the first electronic device based on the first periodic advertising signal. That is, the second electronic device, once receiving the first periodic advertising signal, completes the establishment of the first synchronization link with the first electronic device. That is, the second electronic device can establish the first synchronization link connection with the first electronic device.

At block 102, the first electronic device receives a second periodic advertising signal transmitted by the second electronic device, to establish a second synchronization link of the first electronic device with the second electronic device.

For example, the second electronic device transmits the second periodic advertising signal to the first electronic device, and the first electronic device receives the second periodic advertising signal transmitted by the second electronic device and establishes a synchronization link connection with the second electronic device based on the second periodic advertising signal. That is, the first electronic device, once receiving the second periodic advertising signal, completes the establishment of the second synchronization link of the first electronic device with the second electronic device. That is, the first electronic device establishes the second synchronization link connection with the second electronic device.

In the embodiments of the present disclosure, as an example, a communication method between two electronic devices using TWS earphones is described. The communication method may not only be applied in the TWS earphones but may be applied in any two Bluetooth devices.

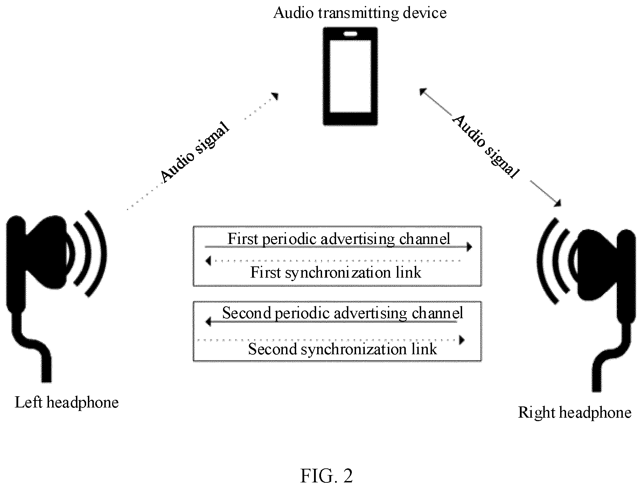

FIG. 2 is a schematic diagram of a scenario of binaural communication of TWS earphones according to an embodiment of the present disclosure. In FIG. 2, as an example, there are two periodic advertising channels and two synchronization links. That is, the periodic advertising channels include a first periodic advertising channel and a second periodic advertising channel, and the synchronization links include a first synchronization link and a second synchronization link. A left headphone can transmit a first periodic advertising signal, periodic advertising of which can be performed via the first periodic advertising channel. The first periodic advertising signal of the left headphone is synchronized to a right headphone via the first synchronization link. The right headphone can transmit a second periodic advertising signal, periodic advertising of which may be performed via the second periodic advertising channel. The second periodic advertising signal of the right headphone is synchronized to the left headphone via the second synchronization link.

It should be understood that, in the embodiments of the present disclosure, the first electronic device can transmit the first periodic advertising signal to the second electronic device, to establish the first synchronization link of the second electronic device with the first electronic device; and the first electronic device can receive the second periodic advertising signal transmitted by the second electronic device, to establish the second synchronization link of the first electronic device with the second electronic device. Thus, in the embodiments of the present disclosure, an information interaction can be implemented between two electronic devices by means of advertising signals and synchronization links. In this way, one electronic device is only allowed to receive data at a time when the other electronic device transmits the data, and the other electronic device never tries to receive a packet at a time when no data is transmitted. Therefore, information synchronization between two communication parties can be achieved without limiting by a time interval between two consecutive messages on the same channel of an asynchronous connectionless link.

In addition, a communication logic between the two electronic devices remains the same, but a signal transmission manner is changed, i.e., the data is transmitted by means of an advertising signal. Since the advertising signal is used for data transmission and reception, in the embodiments of the present disclosure, power consumption of the electronic device can be reduced, for reasons that the advertising signal generates no ACK issue, e.g., an issue that a transmitter is unable to know whether a receiver has received the data, and the advertising signal has a low period interval, a high frequency for transmitting data, and low power consumption.

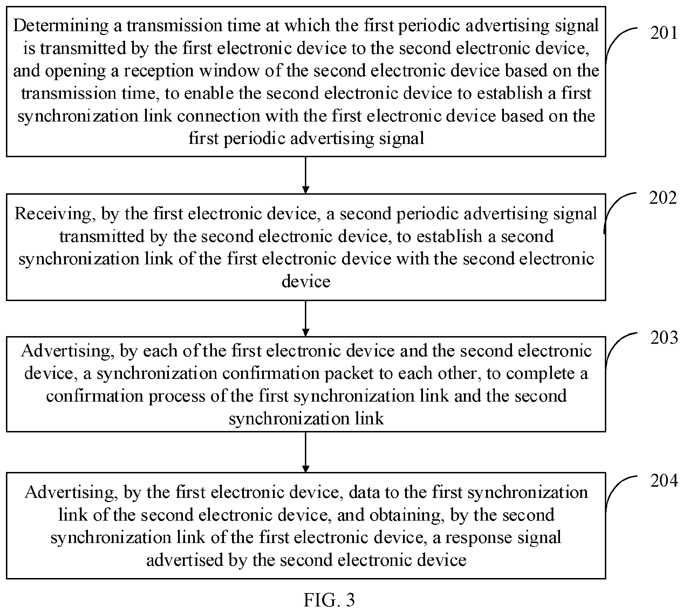

FIG. 3 is a second flowchart of a wireless communication method according to an embodiment of the present disclosure. The wireless communication method is applied in the wireless communication system. The wireless communication system includes a first electronic device and a second electronic device. As illustrated in FIG. 3, the wireless communication method can include the following actions in blocks.

At block 201, a transmission time at which the first periodic advertising signal is transmitted by the first electronic device to the second electronic device is determined, and a reception window of the second electronic device is opened based on the transmission time, to enable the second electronic device to establish a first synchronization link connection with the first electronic device based on the first periodic advertising signal.

For example, the transmission time at which the first periodic advertising signal is transmitted by the first electronic device to the second electronic device is determined, and the reception window of the second electronic device is opened based on the transmission time, such that the second electronic device can receive the first periodic advertising signal synchronously via the reception window. In this way, the second electronic device can establish the first synchronization link connection with the first electronic device based on the first periodic advertising signal. The first periodic advertising signal includes a BLE advertising signal.

For example, in an embodiment, the action of determining the transmission time at which the first periodic advertising signal is transmitted by the first electronic device to the second electronic device, and opening the reception window of the second electronic device based on the transmission time, to enable the second electronic device to establish the first synchronization link connection with the first electronic device based on the first periodic advertising signal at block 201 may include: transmitting, by the first electronic device via a primary channel, a primary channel advertising packet to the second electronic device, to allow the second electronic device to parse an E-UTRA Absolute Radio Frequency Channel Number (EARFCN) of a first data channel and a first time offset, and obtain a first time point for transmitting an auxiliary advertising packet; transmitting, by the first electronic device via the first data channel, the auxiliary advertising packet to the second electronic device at the first time point, to allow the second electronic device to parse an EARFCN of a second data channel and a second time offset, and obtain a second time point for transmitting a periodic advertising packet; and transmitting, by the first electronic device via the second data channel, the periodic advertising packet to the second electronic device at the second time point, to establish the synchronization link.

In some embodiments, for example, the first electronic device can transmit, via the primary channel, the primary channel advertising packet to the second electronic device. Upon receiving the primary channel advertising packet, the second electronic device may directly parse the EARFCN of the first data channel and the first time offset from the primary channel advertising packet, and then obtain, based on the first time offset, the first time point for transmitting the auxiliary advertising packet.

For example, the electronic devices are TWS earphones. As an example, the first electronic device may be the left headphone, and the second electronic device may be the right headphone. As illustrated in FIG. 2, when the TWS earphones are unwrapped, the left headphone (or the right headphone) establishes a BT ACL link with an audio source transmission device. Meanwhile, the left and right headphones turn on extended scan, extended adverting, and periodic adverting in the background and then establish the synchronization links.

As an example, a process of establishing the synchronization link by the right headphone, in which the left headphone can be a main headphone and the right headphone can be an auxiliary headphone.

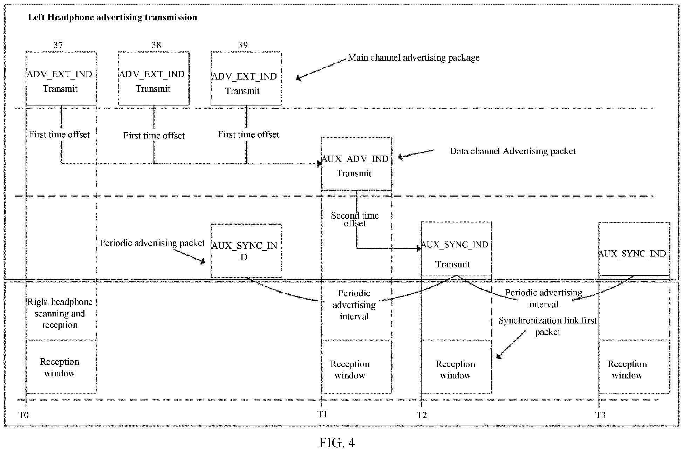

For example, FIG. 4 is a schematic diagram of a scenario of establishing a synchronization link for TWS earphones according to an embodiment of the present disclosure. It should be noted that BLE 5.1 operates in an Industrial Scientific Medical (ISM) Band ranging from 4 GHz to 2.48 Ghz, with 40 (numbered from 0 to 39) available channels having a channel bandwidth of 2 MHz; among 40 available channels, channels numbered 37, 38, and 39 are advertising channels, while the remaining channels are data channels. As illustrated in FIG. 4, the three advertising channels numbered 37, 38, and 39 are primary channels, respectively corresponding to frequencies of 2,402 MHz, 2,426 MHz, and 2,480 MHz. The frequency-hopping technology is used for anti-interference during transmission of Bluetooth signals. Upon completion of transmission of one Bluetooth packet on one channel, a next packet will be transmitted on another channel.

At a time point **T0**, the right headphone opens the reception window **(RX WINDOW)** to receive a primary channel advertising packet **ADV_EXT_IND** transmitted by the left headphone on the primary channel numbered 37, directly parses the EARFCN of the first data channel and the first time offset, and derives a transmission time at which an auxiliary advertising packet **AUX_ADV_IND** is transmitted, i.e., a first time point **T1** for transmitting the auxiliary advertising packet **AUX_ADV_IND,** to facilitate obtaining a data channel and transmission time for subsequent transmission of the auxiliary advertising packet **AUX_ADV_IND.**

As an example, at the time point **T0**, the right headphone opens the reception window **(RX WINDOW)** to receive the primary channel advertising packet **ADV_EXT_IND** transmitted by the left headphone on the primary channel numbered 38, directly parses the EARFCN of the first data channel and the first time offset, and derives the transmission time at which the auxiliary advertising packet **AUX_ADV_IND** is transmitted, i.e., the first time point **T1** for transmitting the auxiliary advertising packet **AUX_ADV_IND.**

As another example, at the time point **T0**, the right headphone opens the reception window **(RX WINDOW)** to receive the primary channel advertising packet **ADV_EXT_IND** transmitted by the left headphone on the primary channel numbered 39, parses the EARFCN of the first data channel and the first time offset, and derives the transmission time at which the auxiliary advertising packet **AUX_ADV_IND** is transmitted, i.e., the first time point **T1** for transmitting the auxiliary advertising packet **AUX_ADV_IND.**

It should be noted that when differently numbered primary channels (primary channels numbered 37, 38, or 39) are used to transmit the primary channel advertising packet **ADV_EXT_IND,** the first time offsets parsed by the different numbered primary channels may be of different values. For example, the parsed first time offset when using the primary channel numbered 37 to transmit the primary channel advertising packet **ADV_EXT_IND** is greater than that when using the primary channel numbered 38 to transmit the primary channel advertising packet **ADV_EXT_IND;** the parsed first time offset when using the primary channel numbered 38 to transmit the primary channel advertising packet **ADV_EXT_IND** is greater than that when using the primary channel numbered 39 to transmit the primary channel advertising packet **ADV_EXT_IND,** and so on.

For example, at the first time point **T1,** the first electronic device transmits, via the first data channel, the auxiliary advertising packet **AUX_ADV_IND** to the second electronic device, to allow the second electronic device to parse the EARFCN of the second data channel and the second time offset, and obtain a second time point **T2** for transmitting a periodic advertising packet **AUX_SYNC_IND,** to facilitate obtaining an EARFCN of a data channel and transmission time for subsequent transmission of the periodic advertising packet **AUX_SYNC_IND.**

For example, at the first time point **T1,** the right headphone opens the reception window to receive the auxiliary advertising packet **AUX_ADV_IND** transmitted by the first data channel, performs a calculation in accordance with a frequency hopping algorithm 2 to obtain the EARFCN of the second data channel and the second time offset, and derives a transmission time at which the periodic advertising packet **AUX_SYNC_IND** is transmitted, i.e., the second time point **T2** for transmitting the periodic advertising packet **AUX_SYNC_IND.**

For example, at the second time point **T2,** the first electronic device transmits, via the second data channel, the periodic advertising packet **AUX_SYNC_IND** to the second electronic device to establish the first synchronization link. For example, at the second time point **T2,** the right headphone opens the reception window to receive the periodic advertising packet **AUX_SYNC_IND** transmitted by the left headphone via the second data channel. The periodic advertising packet **AUX_SYNC_IND** is a first packet in the synchronization link. In this way, the first synchronization link of the right headphone can be established.

It should be noted that a periodic advertising interval in FIG. 4 refers to a time difference between transmission times at which two adjacent periodic advertising packets are transmitted, e.g., a time difference between a third time point **T3** and the second time point **T2.**

At block 202, the first electronic device receives the second periodic advertising signal transmitted by the second electronic device, to establish the second synchronization link of the first electronic device with the second electronic device.

For example, the second electronic device transmits the second periodic advertising signal to the first electronic device. The first electronic device receives the second periodic advertising signal transmitted by the second electronic device, to establish the second synchronization link of the first electronic device with the second electronic device. As an example, the first electronic device is the left headphone, and an establishment process of the second synchronization link of the left headphone is similar to that of the first synchronization link of the right headphone, which is not described in detail herein.

At block 203, the first electronic device and the second electronic device advertise a synchronization confirmation packet to each other, to complete a confirmation process of the first synchronization link and the second synchronization link.

For example, in the embodiments of the present disclosure, when information synchronization is performed between the first electronic device and the second electronic device, a synchronization confirmation of the first electronic device and the second electronic device can be performed by means of the periodic advertising channels and the synchronization links. For example, the first electronic device can transmit a synchronization request signal via the first periodic advertising channel, and receive a synchronization response signal of the second electronic device via the second periodic advertising channel. The first electronic device can transmit the synchronization confirmation packet via the first periodic advertising channel to indicate that periodic advertising data of the second electronic device is synchronized to the first electronic device. The first electronic device obtains the synchronization confirmation packet from the second electronic device via the second periodic advertising channel to indicate that periodic advertising data of the first electronic device is synchronized to the second electronic device.

For example, the first electronic device can transmit the synchronization confirmation packet directly via the first periodic advertising channel, to indicate that the periodic advertising data of the second electronic device is synchronized to the first electronic device. The first electronic device obtains the synchronization confirmation packet from the second electronic device directly via the second periodic advertising channel, to indicate that the periodic advertising data of the first electronic device is synchronized to the second electronic device.

For example, in an embodiment, the action of advertising, by each of the first electronic device and the second electronic device, the synchronization confirmation packet to each other, to complete the confirmation process of the first synchronization link and the second synchronization link at block 203 can include: transmitting, by the first electronic device via the first periodic advertising channel, the synchronization request signal to the first synchronization link of the second electronic device; obtaining, by the second synchronization link of the first electronic device via the second periodic advertising channel, the synchronization response signal from the first synchronization link of the second electronic device; transmitting, by the first electronic device via the first periodic advertising channel, a first synchronization confirmation packet to the first synchronization link of the second electronic device; and obtaining, by the second synchronization link of the first electronic device via the second periodic advertising channel, a second synchronization confirmation packet from the first synchronization link of the second electronic device.

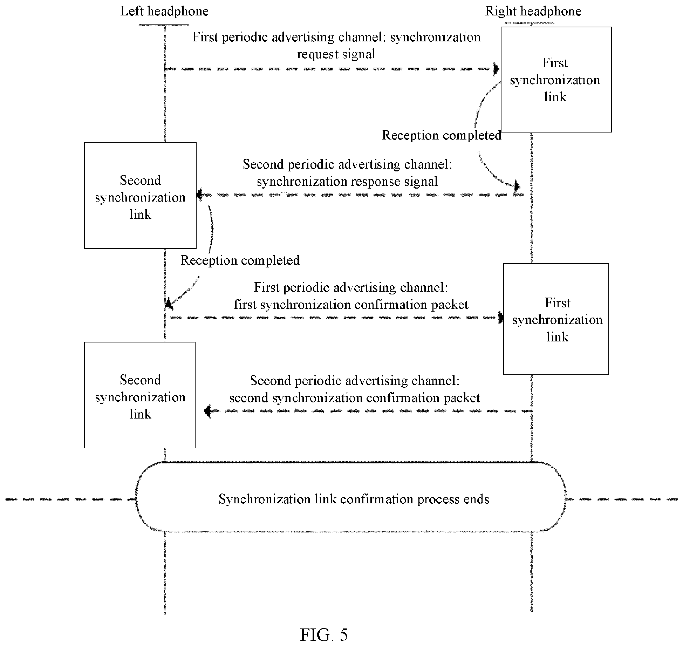

For example, the first electronic device transmits, via the first periodic advertising channel, the synchronization request signal to the first synchronization link of the second electronic device. As an example, the electronic devices are TWS earphones. FIG. 5 is a schematic diagram of an interaction scenario for a synchronization link confirmation according to an embodiment of the present disclosure. For example, the left headphone (or the right headphone) transmits, via a first periodic advertising channel **Advhdl_1,** a synchronization request signal **Sync_Req** to a first synchronization link **Sync1** of the right headphone.

For example, after the first synchronization link of the second electronic device receives the synchronization request signal, the second synchronization link of the first electronic device can obtain, via the second periodic advertising channel, the synchronization response signal from the first synchronization link of the second electronic device. For example, after receiving the synchronization request signal **Sync_Req,** the first synchronization link **Sync1** of the right headphone confirms reception of the synchronization request signal **Sync_Req,** and then transmits a synchronization response signal **Sync_Rsp** to a second synchronization link **Sync2** of the left headphone via a second periodic advertising channel **Advhdl_2.**

For example, the first electronic device can transmit the first synchronization confirmation packet to the first synchronization link of the second electronic device via the first periodic advertising channel. For example, after receiving the synchronization response signal **Sync_Rsp** transmitted by the right headphone, the second synchronization link **Sync2** of the left headphone confirms reception of the synchronization response signal **Sync_Rsp,** and then transmits, on the first periodic advertising channel **Advhdl_1,** a first synchronization confirmation packet **Sync_Confirm** to the first synchronization link **Sync1** of the right headphone.

For example, the second synchronization link of the first electronic device can obtain the second synchronization confirmation packet from the first synchronization link of the second electronic device via the second periodic advertising channel. For example, after receiving a first synchronization confirmation packet **Sync_Confirm**1, the first synchronization link **Sync1** of the right headphone transmits, on the second periodic advertising channel **Advhdl_2,** a second synchronization confirmation packet **Sync_Confirm**2 to the second synchronization link **Sync2** of the left headphone.

It should be noted that, in order to save time for confirming the establishment of the synchronization link, the confirmation processes of the two synchronization links can be implemented directly by means of the synchronization confirmation packet without a process of transmitting the synchronization request signal and the synchronization response signal.

It should be noted that the confirmation process for the establishment of the dual synchronization links can be optimized by using a Periodic Advertising Sync Transfer (PAST) function, on the condition that a BLE link is established between the left and right earphones or a process is simplified by a third device.

For example, in the absence of the PAST function, the second electronic device has already performed a periodic advertising synchronization with the first electronic device. In this way, the second electronic device can receive and parse the periodic advertising packet **AUX_SYNC_IND** and a fixed frequency extension signal that is from the first electronic device. Meanwhile, the second electronic device may establish a connection with a third electronic device. If the third electronic device wants to receive the periodic advertising packet from the first electronic device, the third electronic device is required to voluntarily perform scanning and perform the periodic advertising synchronization with the first electronic device. The third electronic device may require additional time and power for performing such a process, but it often has limited power.

The situation is quite different when the PAST function is available. In the same scenario, if the third electronic device wants to perform scanning and perform the periodic advertising synchronization with the first electronic device, the second electronic device can transmit periodic advertising synchronization information to the third electronic device via a BLE link layer. The PAST function can simplify the process and help the third electronic device with limited power to save power.

At block 204, the first electronic device advertises data to the first synchronization link of the second electronic device, and obtains, via the second synchronization link of the first electronic device, a response signal advertised by the second electronic device.

For example, in the embodiments of the present disclosure, when the data transmission and reception are performed between the first electronic device and the second electronic device, the data may be transmitted and received via the periodic advertising channels and synchronization links. As an example, the first electronic device advertises the data to the second electronic device. The first electronic device transmits the data to the second electronic device via the first periodic advertising channel, and obtains a response signal of the second electronic device via the second periodic advertising channel. Subsequently, the first electronic device transmits a next packet of data to the second electronic device via the first periodic advertising channel, and obtains a response signal of the second electronic device via the second periodic advertising channel, and so on.

For example, in an embodiment, the action of advertising, by the first electronic device, the data to the first synchronization link of the second electronic device, and obtaining, by the second synchronization link of the first electronic device, the response signal advertised by the second electronic device at block 204 can include: transmitting, by the first electronic device via the first periodic advertising channel, first data to the first synchronization link of the second electronic device; obtaining, by the second synchronization link of the first electronic device via the second periodic advertising channel, a corresponding response signal from the first synchronization link of the second electronic device; transmitting, by the first electronic device via the first periodic advertising channel, second data to the first synchronization link of the second electronic device; and obtaining, by the second synchronization link of the first electronic device via the second periodic advertising channel, a corresponding response signal from the first synchronization link of the second electronic device.

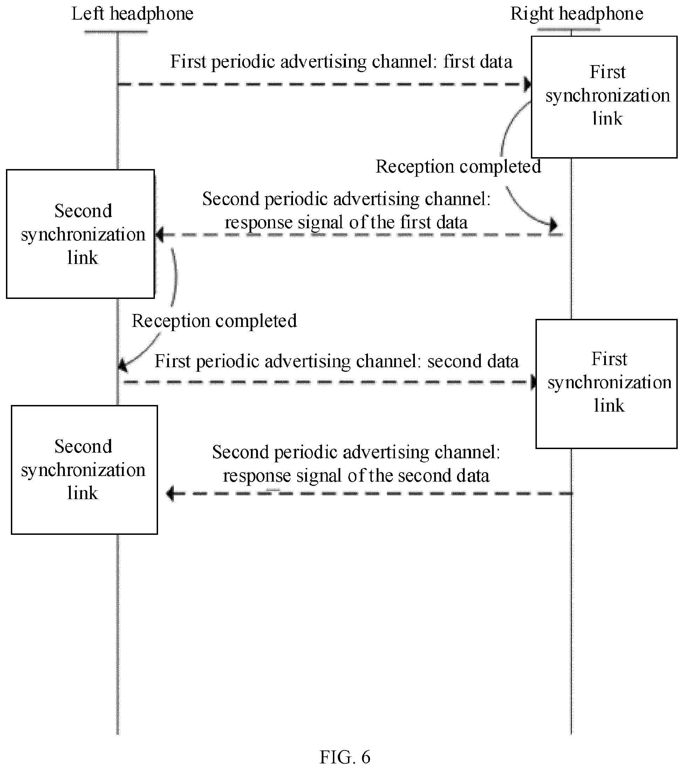

For example, the first electronic device transmits, via the first periodic advertising channel, the first data to the first synchronization link of the second electronic device. As an example, the electronic devices are TWS earphones. For example, FIG. 6 is a schematic diagram of an interaction scenario of data transmission and reception of TWS earphones according to an embodiment of the present disclosure. For example, the left headphone transmits, via the first periodic advertising channel **Advhdl_1,** first data **Data1** to the first synchronization link **Sync1** of the right headphone.

For example, the second synchronization link of the first electronic device can obtain the corresponding response signal from the first synchronization link of the second electronic device via the second periodic advertising channel. For example, after receiving the first data **Data1** transmitted by the second synchronization link **Sync2** of the left headphone via the first periodic advertising channel **Advhdl_1,** the first synchronization link **Sync1** of the right headphone confirms reception of the first data **Data1,** and then replies with a corresponding response signal **Data1_ACK** to the left headphone via the second periodic advertising channel **Advhdl_2.**

For example, after the second synchronization link of the first electronic device obtains the corresponding response signal from the first synchronization link of the second electronic device via the second periodic advertising channel, the first electronic device can transmit the second data to the first synchronization link of the second electronic device via the first periodic advertising channel. For example, after receiving the corresponding response signal **Data1_ACK** replied by the right headphone via the second periodic advertising channel **Advhdl_2,** the left headphone can transmit second data **Data2** to the first synchronization link **Sync1** of the right headphone via the first periodic advertising channel **Advhdl_1.**

For example, after the first electronic device transmits the second data to the first synchronization link of the second electronic device via the first periodic advertising channel, the second synchronization link of the first electronic device can obtain the corresponding response signal from the first synchronization link of the second electronic device via the second periodic advertising channel. For example, after receiving the second data **Data2** transmitted by the second synchronization link **Sync2** of the left headphone via the first periodic advertising channel **Advhdl_1,** the first synchronization link **Sync1** of the right headphone can transmit a corresponding response signal **Data2_ACK** to the second synchronization link **Sync2** of the left headphone via the second periodic advertising channel **Advhdl_2.** A process of transmitting data by the right headphone is similar to that of transmitting data by the left headphone, which is not described in detail herein.

It should be understood that in the embodiments of the present disclosure, the synchronization link between the first electronic device and the second electronic device can be established. The synchronization link between the first electronic device and the second electronic device can be confirmed via the periodic advertising channels and the synchronization links. Data transmission and reception can be realized via the periodic advertising channels and the synchronization links. Thus, in the embodiments of the present disclosure, the information interaction between two electronic devices can be implemented through two periodic advertising channels and two synchronization links. In this way, one electronic device can receive data only when the other electronic device transmits the data, and the other electronic device never tries to receive a packet when no data is transmitted. That is, data is received at the same time when the data is transmitted, and no data is received at the time when no data is transmitted, thereby simultaneously performing the transmission and reception without being limited by the time interval between two consecutive messages on the same channel of the asynchronous connectionless link. Accordingly, information synchronization between two communication parties can be achieved. In addition, since the advertising signal is used for data transmission and reception, the advertising signal generates no ACK issue and has a small period interval, a frequency for transmitting data is relatively, and low power consumption is required, such that the embodiments of the present disclosure can reduce power consumption of the electronic device.

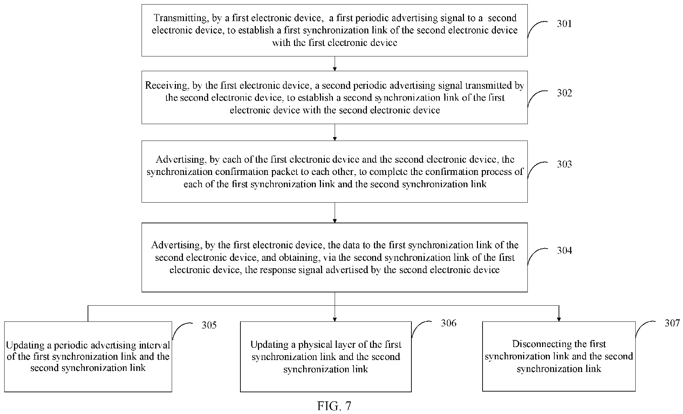

FIG. 7 is a third flowchart of a wireless communication method according to an embodiment of the present disclosure. As illustrated in FIG. 7, the wireless communication method can include the following actions in blocks.

At block 301, the first electronic device transmits the first periodic advertising signal to the second electronic device, to establish the first synchronization link of the second electronic device with the first electronic device.

A specific implementation of the action at block 301 can be referred to the embodiment of the operation at block 101, which is not described in detail herein.

At block 302, the first electronic device receives the second periodic advertising signal transmitted by the second electronic device, to establish the second synchronization link of the first electronic device with the second electronic device.

A specific implementation of the operation at block 302 can be referred to the embodiment of the operation at block 102, which is not described in detail herein.

At block 303, the first electronic device and the second electronic device advertise the synchronization confirmation packet to each other, to complete the confirmation process of the first synchronization link and the second synchronization link.

A specific implementation of the action at block 303 can be referred to the embodiment of the action at block 203, which is not described in detail herein.

At block 304, the first electronic device advertises the data to the first synchronization link of the second electronic device, and obtains, via the second synchronization link of the first electronic device, the response signal advertised by the second electronic device.

A specific implementation of the action at block 304 can be referred to the embodiment of the action at block 204, which is not described in detail herein.

At block 305, a periodic advertising interval of the first synchronization link and the second synchronization link is updated.

For example, an efficiency of data transmission can be increased or reduced through an update process of the periodic advertising interval. That is, the periodic advertising interval of the first synchronization link and the second synchronization link needs to be updated. For example, an efficiency of data transmission of the left headphone and the right headphone can be increased or reduced through the update process of the periodic advertising interval. For example, the data transmission efficiency can be increased or reduced through shortening the periodic advertising interval.

For example, in an embodiment, the action of updating of the periodic advertising interval of the first synchronization link and the second synchronization link at block 305 can include: transmitting, by the first electronic device via a first periodic advertising channel, an update packet to the first synchronization link of the second electronic device, in which the update packet includes a target periodic advertising interval, a target time offset, and a multiplier; obtaining, by the second synchronization link of the first electronic device via a second periodic advertising channel, an update confirmation packet from the first synchronization link of the second electronic device; transmitting data to the first synchronization link of the second electronic device based on the target periodic advertising interval at a target time point, in which the target time point is obtained based on the target time offset and the multiplier; and obtaining, by the second synchronization link of the first electronic device via the second periodic advertising channel, a corresponding response signal from the first synchronization link of the second electronic device.

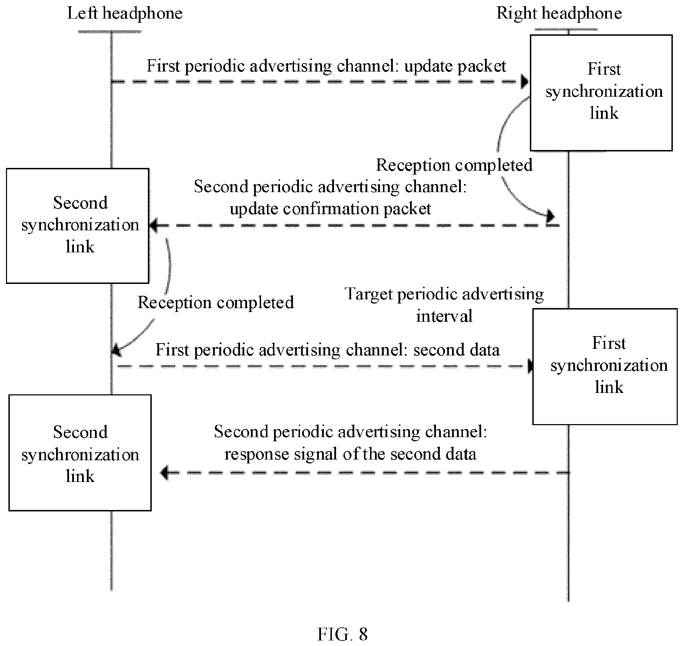

As an example, the electronic devices are TWS earphones. FIG. 8 is a schematic diagram of an interaction scenario of updating a periodic advertising interval of TWS earphones according to an embodiment of the present disclosure. As illustrated in FIG. 8, the left headphone transmits an interval update packet **Intvl_update** to the first synchronization link **Sync1** of the right headphone via the first periodic advertising channel **Advhdl_1.** The interval update packet **Intvl_update** contains a target periodic advertising interval **New Interval,** a target time offset **Offset,** and a multiplier **instant.** The multiplier **instant** is a positive integer, e.g., 1, 2, 3, or the like. The first synchronization link **Sync1** of the right headphone is used to be synchronized to a new periodic advertising interval.

After receiving the interval update packet **Intvl_update** transmitted by the left headphone via the first periodic advertising channel **Advhdl_1,** the first synchronization link **Sync1** of the right headphone confirms the reception of the interval update packet **Intvl_update,** the first synchronization link **Sync1** of the right headphone replies with an update confirmation packet **Update_confirm** to the left headphone via the second periodic advertising channel **Advhdl_2.**

After receiving the update confirmation packet **Update_confirm** replied by the first synchronization link **Sync1** of the right headphone via the second periodic advertising channel **Advhdl_2,** the second synchronization link **Sync2** of the left headphone confirms the reception of the update confirmation packet **Update_confirm,** and then transmits data to the first synchronization link **Sync1** of the right headphone based on a target periodic advertising interval **New Interval** at the target time point. That is, the update process is completed by performing scheduling at a mutually-agreed time point based on a new periodic advertising interval.

It should be noted that the target time point is obtained based on the target time offset Offset and the multiplier **instant.** In some embodiments, the time point at which the update confirmation packet **Update_confirm** is generated is added with an original periodic advertising interval multiplied by the multiplier **instant** and then added with the target time offset **Offset** to obtain a value as the target time point. From the target time point, data transmission and reception are performed based on the target periodic advertising interval **New Interval** (i.e., the new periodic advertising interval).

When obtaining data transmitted by the left headphone at the target periodic advertising interval **New Interval** via the first periodic advertising channel **Advhdl_1,** the first synchronization link **Sync1** of the right headphone transmits the response signal **Data2_ACK** of the second data to the second synchronization link **Sync2** of the left headphone via the second periodic advertising channel **Advhdl_2.**

It should be noted that more data can be transmitted in the same period by reducing the time offset. Therefore, the dual synchronization links can maximize a data throughput, which may exceed that of BT ACL and of BLE ACL.

At block 306, a physical layer of the first synchronization link and the second synchronization link is updated.

For example, the physical layer of the first synchronization link and the second synchronization link can be updated when the first electronic device and the second electronic device need to increase their rates or improve their sensitivity. For example, the rate or sensitivity of each of the left headphone and the right headphone can be increased through an update process of the physical layer. For example, a transmission speed of the physical layer can be increased.

For example, in an embodiment, the action of updating the physical layer of the first synchronization link and the second synchronization link at block 306 can include: transmitting, by the first electronic device via a first periodic advertising channel, a physical layer update packet to the first synchronization link of the second electronic device, in which the physical layer update packet includes a target physical layer, a target time offset, and a multiplier; obtaining, by the second synchronization link of the first electronic device via a second periodic advertising channel, an update confirmation packet from the first synchronization link of the second electronic device; transmitting data to the first synchronization link of the second electronic device based on the target physical layer at a target time point, in which the target time point is obtained based on the target time offset and the multiplier; and obtaining, by the second synchronization link of the first electronic device via the second periodic advertising channel, a corresponding response signal from the first synchronization link of the second electronic device.

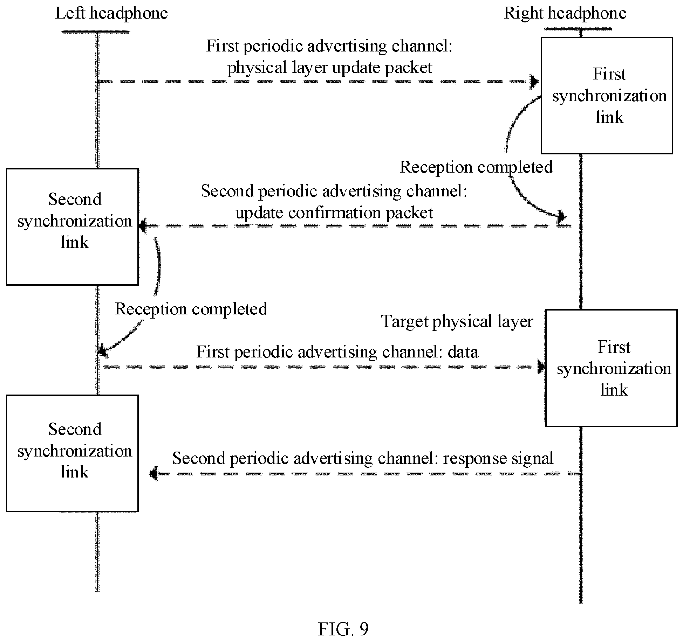

As an example, the electronic devices are TWS earphones. FIG. 9 is a schematic diagram of an interaction scenario of updating a physical layer of TWS earphones according to an embodiment of the present disclosure. For example, the left headphone transmits a physical layer update packet **PHY_update** to the first synchronization link **Sync1** of the right headphone via the first periodic advertising channel **Advhdl_1.** The physical layer update packet includes a target physical layer, a target time offset **Offset,** and a multiplier **instant.** The multiplier **instant** is a positive integer, e.g., 1, 2, 3, or the like.

After receiving the physical layer update packet **PHY_update** transmitted by the left headphone via the first periodic advertising channel **Advhdl_1,** the first synchronization link **Sync1** of the right headphone confirms the reception of the physical layer update packet **PHY_update,** and the first synchronization link **Sync1** of the right headphone replies with the update confirmation packet **Update_confirm** to the left headphone via the second periodic advertising channel **Advhdl_2.**

After receiving the update confirmation packet **Update_confirm** replied by the first synchronization link **Sync1** of the right headphone via the second periodic advertising channel **Advhdl_2,** the second synchronization link **Sync2** of the left headphone confirms the reception of the update confirmation packet **Update_confirm,** and then transmits data to the first synchronization link **Sync1** of the right headphone based on a target physical layer **New PHY** at the target time point. That is, the update process is completed by performing scheduling at a mutually-agreed time point based on a new physical layer.

When obtaining data transmitted, via the first periodic advertising channel **Advhdl_1** based on the target physical layer **New PHY,** by the left headphone, the first synchronization link **Sync1** of the right headphone transmits the response signal **Data2_ACK** of the data to the second synchronization link **Sync2** of the left headphone via the second periodic advertising channel **Advhdl_2.**

A purpose of updating the physical layer PHY is mainly to improve sensitivity and a transmission speed. For example, the transmission speed of the physical layer can be increased, e.g., 1 Mbps -> 2 Mbps -> 4 Mbps. Similarly, the transmission speed of the physical layer can be decreased, e.g., 4 Mbps -> 2 Mbps -> 1Mbps.

Accordingly, user experience can be improved by updating the physical layer based on signal sensitivity or the like. For example, when the signal is good, the transmission speed of the physical layer can be automatically increased and a packet length can be extended to achieve fast data transmission and reception. When the signal is poor, the transmission speed of the physical layer can be reduced to avoid a disconnection of the synchronization link.

At block 307, the first synchronization link and the second synchronization link are disconnected.

For example, when synchronization is unnecessary, both the first synchronization link and the second synchronization link can be disconnected to save power. For example, when synchronization is unnecessary, the dual synchronization links of the left headphone and the right headphone can be disconnected.

For example, in an embodiment, the action of disconnecting the first synchronization link and the second synchronization link at block 307 can include: transmitting, by the first electronic device via a first periodic advertising channel, a disconnection request signal to the first synchronization link of the second electronic device, to disconnect the first synchronization link of the second electronic device; and obtaining, by the second synchronization link of the first electronic device via a second periodic advertising channel, a disconnection confirmation packet from the first synchronization link of the second electronic device, and then disconnecting the second synchronization link of the first electronic device.

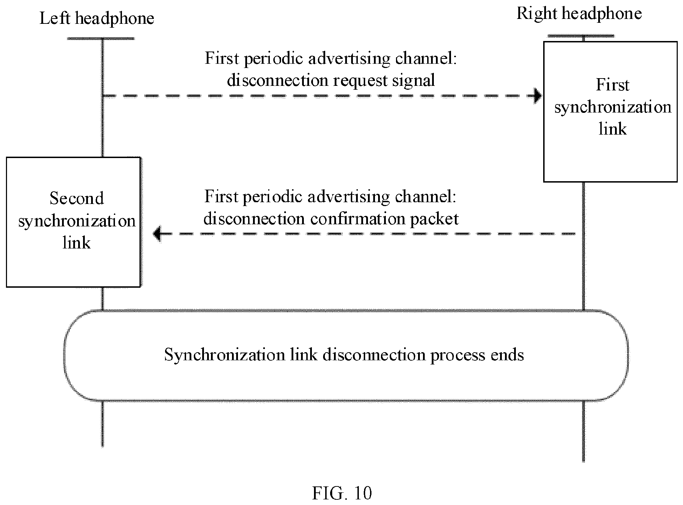

As an example, the electronic devices are TWS earphones. FIG. 10 is a schematic diagram of an interaction scenario of disconnecting a synchronization link of TWS earphones according to an embodiment of the present disclosure. For example, the left headphone transmits a disconnection request signal **Dis_Req** to the first synchronization link **Sync1** of the right headphone via the first periodic advertising channel **Advhdl_1.** After receiving the disconnection request signal **Dis_Req,** the first synchronization link **Sync1** of the right headphone disconnects the first synchronization link **Sync1.** At the same time, the right headphone replies with a disconnection confirmation packet **Dis_Confirm** to the second synchronization link **Sync2** of the left headphone via the second periodic advertising channel **Advhdl_2.** After receiving the disconnection confirmation packet **Dis_Confirm,** the second synchronization link **Sync2** of the left headphone disconnects the second synchronization link **Sync2.** In this way, a disconnection process of the synchronization link is completed.

It should be understood that, in the embodiments of the present disclosure, an effect of BT ACL and BLE ACL can be achieved by using two periodic advertising channels and two synchronization links, enabling more flexible control of scheduling and power consumption. For example, if one of the electronic devices only transmits data and receives no data, the periodic advertising interval of the electronic device can be increased to achieve lower power consumption. If no data is available, a skip scheduling manner in a BLE 5.2 protocol can be used to achieve lower power consumption. For example, straddle-type scheduling of the skip scheduling method can be used to adjust data packet reception from original every 1 second to every 10 seconds, thereby reducing the power consumption.

For example, in an embodiment, the periodic advertising packet includes a Advertise Isochronous Stream (BIS). For example, both the left and right headphones perform similar periodic advertising functions via the BIS. The left and right headphones each listen to the other's BIS to achieve similar purposes. The BIS transmits data at fixed intervals and receives no data. A specific process of transmitting data by the BIS is similar to that of transmitting and receiving data via the first synchronization link and the second synchronization link in the embodiments of the present disclosure.

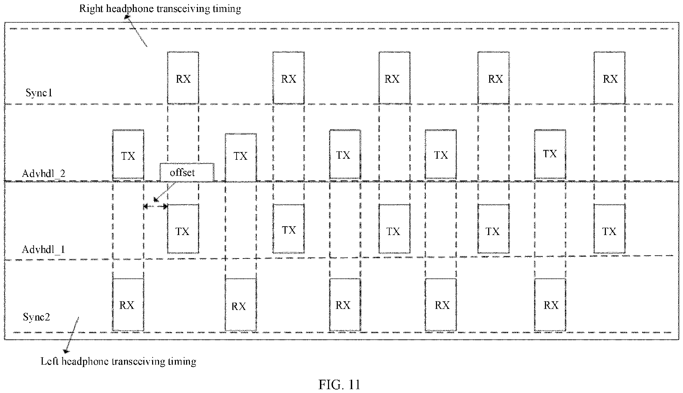

FIG. 11 is a schematic diagram of air interface packet timing of TWS earphones according to an embodiment of the present disclosure. As illustrated in FIG. 11, a data packet transmitted from an antenna is an air interface packet. The left or right headphone transmits data to the other. A specific content of the packet is freely defined by an application and may be music data, control status data, or the like. By controlling the periodic advertising interval and offset in FIG. 11, the left or right headphone can achieve a highest transceiving efficiency (offset >= 0 µs), without being limited by a time interval T_IFS (150 µs) between two consecutive messages on the same channel in the ACL link. For each path of periodic data, continuous transmission of ultra-long data can be realized by attaching an auxiliary link packet **AUX_CHAIN_IND** to an end of a data packet, which can be freely customized based on buffer of the earphones.

It should be understood that in the embodiments of the present disclosure, the left and right headphones achieve a data transmission and reception effect of the ACL link by establishing the dual synchronization links, and achieve a same function as the ACL link using the periodic advertising channel and the synchronization links. In addition, the use of this technical function can freely control a data length, an advertising period, etc., and has advantages in the power consumption and data throughput.

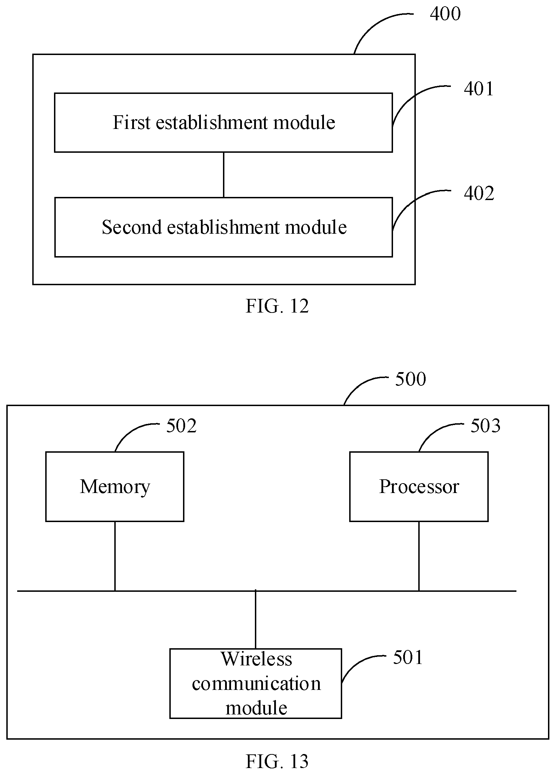

FIG. 12 is a schematic structural diagram of a wireless communication apparatus according to an embodiment of the present disclosure. As illustrated in FIG. 12, a wireless communication apparatus 400 may include a first establishment module 401 and a second establishment module 402.

The first establishment module 401 is configured to transmit, by means of the first electronic device, a first periodic advertising signal to the second electronic device, to establish a first synchronization link of the second electronic device with the first electronic device.

The second establishment module 402 is configured to receive, by means of the first electronic device, a second periodic advertising signal transmitted by the second electronic device, to establish a second synchronization link of the first electronic device with the second electronic device.

The embodiments of the present disclosure provide a computer-readable storage medium. The computer-readable storage medium stores a computer program. The computer program, when executed on a computer, causes the computer to perform the process in the wireless communication method according to any of the embodiments.

The embodiments of the present disclosure further provide an electronic device including a memory and a processor. The processor is configured to perform, by invoking a computer program stored in the memory, the process in the wireless communication method according to any of the embodiments.

For example, the above-mentioned electronic device may be a mobile terminal such as a tablet computer or a smartphone. FIG. 13 is a schematic structural diagram of an electronic device according to an embodiment of the present disclosure.

As illustrated in FIG. 13, an electronic device 500 can include components such as a wireless communication module 501, a memory 502, a processor 503, etc. Those skilled in the art can understand that the structure of the electronic device illustrated in FIG. 13 does not constitute a limitation of the electronic device. The electronic device 500 may include more or fewer components than those illustrated in the figure, or combine certain components, or have a different arrangement of components.

The wireless communication module 501 can be configured for wireless communication with external devices, such as for Bluetooth communication.

The memory 502 can be configured to store an application and data. The application stored in the memory 502 contains executable codes. The application may form various functional modules. The processor 503 performs various functional applications and data processing through executing the application stored in the memory 502.

The processor 503, as a control center of the electronic device, connects individual parts of the entire electronic device using various interfaces and lines, and performs various functions of the electronic device and processes data by running or executing the application stored in the memory 502 and by calling the data stored in the memory 502, thereby monitoring the electronic device as a whole.

In the embodiments, the processor 503 in the electronic device loads executable codes corresponding to processes of one or more applications into the memory 502 in accordance with the following instructions, and executes the application stored in the memory 502 to: transmit, by means of the first electronic device, a first periodic advertising signal to the second electronic device, to establish a first synchronization link of the second electronic device with the first electronic device; and receive, by the first electronic device, a second periodic advertising signal transmitted by the second electronic device, to establish a second synchronization link of the first electronic device with the second electronic device.

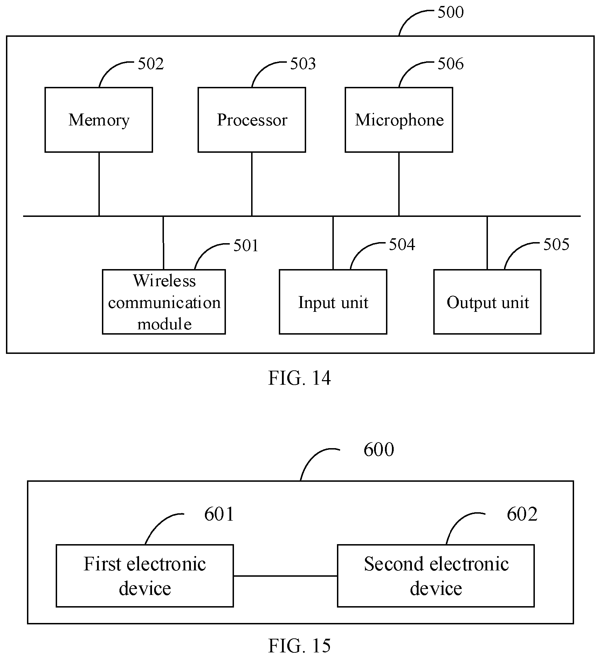

As illustrated in FIG. 14, the electronic device 500 can include a wireless communication module 501, a memory 502, a processor 503, a battery 504, a microphone 505, a speaker 506, and other components.

The wireless communication module 501 can be configured for wireless communication with external devices, such as for Bluetooth communication.

The memory 502 can be configured to store an application and data. The application stored in the memory 502 contains executable codes. The application may form various functional modules. The processor 503 performs various functional applications and data processing by executing the application stored in the memory 502.

The processor 503, as a control center of the electronic device, connects individual parts of the entire electronic device using various interfaces and lines, and performs various functions of the electronic device and processes data by running or executing the application stored in the memory 502 and by calling the data stored in the memory 502, thereby monitoring the electronic device as a whole.

The battery 504 can be configured to provide electrical support to various components of the electronic device to ensure proper action of the various components.

The microphone 505 can be configured to receive sound signals from an ambient environment, e.g., voice from a user.

The speaker 506 can be configured play sound signals.

In the embodiments, the processor 503 in the electronic device loads executable codes corresponding to processes of one or more applications into the memory 502 in accordance with the following instructions, and executes the application stored in the memory 502 to perform: transmit, by means of the first electronic device, a first periodic advertising signal to the second electronic device, to establish a first synchronization link of the second electronic device with the first electronic device; and receive, by means of the first electronic device, a second periodic advertising signal transmitted by the second electronic device, to establish a second synchronization link of the first electronic device with the second electronic device.

The embodiments of the present disclosure further provide a wireless communication system, which includes a first electronic device and a second electronic device. The first electronic device can be configured to obtain an audio signal of an audio source transmission device. The second electronic device can be configured to receive a first periodic advertising signal transmitted by the first electronic device to establish a first synchronization link. The first electronic device can be further configured to receive a second periodic advertising signal transmitted by the second electronic device, and then establish a second synchronization link. The first electronic device can perform audio signal transmission with the second electronic device via the first synchronization link and the second synchronization link, after a synchronization connection between the first electronic device and the second electronic device is established.

In some embodiments, the first electronic device can determine a transmission time at which the first periodic advertising signal is transmitted by the first electronic device to the second electronic device; and open a reception window of the second electronic device based on the transmission time, to enable the second electronic device to establish a first synchronization link connection with the first electronic device based on the first periodic advertising signal.

In some embodiments, the first electronic device and the second electronic device can advertise a synchronization confirmation packet to each other, to complete a confirmation process of the first synchronization link and the second synchronization link.

In some embodiments, the first electronic device can advertise data to the first synchronization link of the second electronic device. A response signal advertised by the second electronic device can be obtained via the second synchronization link of the first electronic device.

In some embodiments, the first electronic device can update a periodic advertising interval of the first synchronization link and the second synchronization link.

In some embodiments, the first electronic device can transmit, via a first periodic advertising channel, an update packet to the first synchronization link of the second electronic device. The update packet includes a target periodic advertising interval, a target time offset, and a multiplier. The second synchronization link of the first electronic device can obtain, via a second periodic advertising channel, an update confirmation packet from the first synchronization link of the second electronic device. Data can be transmitted to the first synchronization link of the second electronic device based on the target periodic advertising interval at a target time point. The target time point can be obtained based on the target time offset and the multiplier. The second synchronization link of the first electronic device can obtain, via the second periodic advertising channel, a corresponding response signal from the first synchronization link of the second electronic device.

In some embodiments, the first electronic device can update a physical layer of the first synchronization link and the second synchronization link.

In some embodiments, the first electronic device can transmit, via a first periodic advertising channel, a physical layer update packet to the first synchronization link of the second electronic device. The physical layer update packet can include a target physical layer, a target time offset, and a multiplier. The second synchronization link of the first electronic device can obtain, via a second periodic advertising channel, an update confirmation packet from the first synchronization link of the second electronic device. Data can be transmitted to the first synchronization link of the second electronic device based on the target physical layer at a target time point. The target time point can be obtained based on the target time offset and the multiplier. The second synchronization link of the first electronic device can obtain, via the second periodic advertising channel, a corresponding response signal from the first synchronization link of the second electronic device.

In some embodiments, the first electronic device can disconnect each of the first synchronization link and the second synchronization link.

In some embodiments, the first electronic device can transmit, via a first periodic advertising channel, a disconnection request signal to the first synchronization link of the second electronic device, to disconnect the first synchronization link of the second electronic device. The second synchronization link of the first electronic device can obtain, via a second periodic advertising channel, a disconnection confirmation packet from the first synchronization link of the second electronic device, and then disconnect the second synchronization link of the first electronic device.

The embodiments of the present disclosure further provide a wireless communication system. FIG. 15 is a schematic structural diagram of a wireless communication system according to an embodiment of the present disclosure. As illustrated in FIG. 15, a wireless communication system 600 can include a first electronic device 601 and a second electronic device 602. The first electronic device 601 can be configured to obtain an audio signal of an audio source transmission device, and transmit a first periodic advertising signal to the second electronic device 602. The second electronic device 602 can be configured to receive the first periodic advertising signal transmitted by the first electronic device 601 to establish a first synchronization link. That is, the second electronic device 602, after receiving the first periodic advertising signal, establishes the first synchronization link with the first electronic device 601.

The first electronic device 601, after receiving the second periodic advertising signal transmitted by the second electronic device 602, establishes the second synchronization link with the second electronic device 602. The first electronic device 601 can perform audio signal transmission with the second electronic device 602 via the first synchronization link and the second synchronization link, after a synchronization connection between the first electronic device 601 and the second electronic device 602 is established, and synchronization between the first electronic device 601 and the second electronic device 602 can be realized based on a connection between the first synchronization link and the second synchronization link.

In above embodiments, different aspects are emphasized in description of respective embodiments. Those are not detailed in some embodiments can refer to the above detailed description of the wireless communication method, which is not described in detail herein.

The wireless communication apparatus provided by the embodiments of the present disclosure is of the same concept as the wireless communication method according to any of the above embodiments. The method according to any of the wireless communication method embodiments can be executed on the wireless communication apparatus, a specific implementation of which can refer to the wireless communication method embodiments and will be omitted herein.

It should be noted that, for the wireless communication method according to the embodiments of the present disclosure, those skilled in the art can understand that all or part of the processes for implementing the wireless communication method according to the embodiments of the present disclosure can be completed by controlling relevant hardware through a computer program. The computer program may be stored in a computer-readable storage medium such as in a memory and executed by at least one processor. The computer program, when executed, may include the process of any of the embodiments of the wireless communication method. The storage medium may be a disk, an optical disk, a Read Only Memory (ROM,), a Random Access Memory (RAM,), etc.

Functional modules of the wireless communication apparatus according to the embodiments of the present disclosure may be integrated into one processing unit or they may physically exist separately, or two or more modules may be integrated into one module. The integrated module may be implemented in the form of hardware, or in the form of a software functional module. When the integrated module is implemented in the form of the software functional module and is sold or used as a standalone product, it can be stored in a computer-readable storage medium. The computer-readable storage medium may be, e.g., an ROM, a magnetic disk, or an optical disc.

The wireless communication method and apparatus, the storage medium, the electronic device, and the system according to the embodiments of the present disclosure are described in detail above. Specific embodiments are used in the present disclosure to illustrate the principles and implementations of the present disclosure. The description of the above embodiments is only intended to facilitate understanding of the method and its core concepts. Meanwhile, those skilled in the art can make modification specific implementations and change an application scope based on the concepts of the present disclosure. In summary, the contents of the specification shall not be construed as limitations of the present disclosure.

## Claims

1. A wireless communication method, applied in a wireless communication system comprising a first electronic device and a second electronic device, the method comprising:
transmitting, by the first electronic device via a primary channel, a primary channel advertising packet to the second electronic device, to allow the second electronic device to parse an E-UTRA Absolute Radio Frequency Channel Number, EARFCN, of a first data channel and a first time offset, and obtain a first time point for transmitting an auxiliary advertising packet;
transmitting, by the first electronic device via the first data channel, the auxiliary advertising packet to the second electronic device at the first time point, to allow the second electronic device to parse an EARFCN of a second data channel and a second time offset, and obtain a second time point for transmitting a first periodic advertising signal;
opening, by the second electronic device, a reception window of the second electronic device based on the second time point, to establish a first synchronization link connection with the first electronic device based on the first periodic advertising signal; and
receiving (102), by the first electronic device, a second periodic advertising signal transmitted by the second electronic device, to establish a second synchronization link of the first electronic device with the second electronic device.

2. The wireless communication method according to claim 1, further comprising:
advertising (203), by each of the first electronic device and the second electronic device, a synchronization confirmation packet to each other, to complete a confirmation process of the first synchronization link and the second synchronization link.

3. The wireless communication method according to claim 2, further comprising:
advertising (204), by the first electronic device, data to the first synchronization link of the second electronic device, and obtaining, by the second synchronization link of the first electronic device, a response signal advertised by the second electronic device.

4. The wireless communication method according to claim 1, further comprising:
updating (305) a periodic advertising interval of the first synchronization link and the second synchronization link.

5. The wireless communication method according to claim 4, wherein said updating (305) the periodic advertising interval of the first synchronization link and the second synchronization link comprises:
transmitting, by the first electronic device via a first periodic advertising channel, an update packet to the first synchronization link of the second electronic device, the update packet comprising a target periodic advertising interval, a target time offset, and a multiplier;
obtaining, by the second synchronization link of the first electronic device via a second periodic advertising channel, an update confirmation packet from the first synchronization link of the second electronic device;
transmitting, at a target time point, data to the first synchronization link of the second electronic device based on the target periodic advertising interval, the target time point being obtained based on the target time offset and the multiplier; and
obtaining, by the second synchronization link of the first electronic device via the second periodic advertising channel, a corresponding response signal from the first synchronization link of the second electronic device.

6. The wireless communication method according to claim 1, further comprising:
updating (306) a physical layer of the first synchronization link and the second synchronization link.

7. The wireless communication method according to claim 6, wherein said updating (306) the physical layer of the first synchronization link and the second synchronization link comprises:
transmitting, by the first electronic device via a first periodic advertising channel, a physical layer update packet to the first synchronization link of the second electronic device, the physical layer update packet comprising a target physical layer, a target time offset, and a multiplier;
obtaining, by the second synchronization link of the first electronic device via a second periodic advertising channel, an update confirmation packet from the first synchronization link of the second electronic device;
transmitting, at a target time point, data to the first synchronization link of the second electronic device based on the target physical layer, the target time point being obtained based on the target time offset and the multiplier; and
obtaining, by the second synchronization link of the first electronic device via the second periodic advertising channel, a corresponding response signal from the first synchronization link of the second electronic device.

8. The wireless communication method according to claim 1, further comprising:
disconnecting (307) the first synchronization link and the second synchronization link.

9. The wireless communication method according to claim 8, wherein said disconnecting (307) the first synchronization link and the second synchronization link comprises:
transmitting, by the first electronic device via a first periodic advertising channel, a disconnection request signal to the first synchronization link of the second electronic device, to disconnect the first synchronization link of the second electronic device; and
obtaining, by the second synchronization link of the first electronic device via a second periodic advertising channel, a disconnection confirmation packet from the first synchronization link of the second electronic device, and disconnecting the second synchronization link of the first electronic device.

10. A wireless communication system, comprising a first electronic device and a second electronic device, wherein the wireless communication system is configured to perform the wireless communication method according to any one of claims 1 to 9.

11. A computer-readable storage medium having stored thereon instructions which, when executed by one or more processors of a wireless communication system comprising a first electronic device and a second electronic device, cause the wireless communication system to perform the wireless communication method according to any one of claims 1 to 9

## Patentansprüche

1. Verfahren zur drahtlosen Kommunikation, angewendet in einem drahtlosen Kommunikationssystem umfassend eine erste elektronische Vorrichtung und eine zweite elektronische Vorrichtung, wobei das Verfahren Folgendes umfasst:
Senden, durch die erste elektronische Vorrichtung, eines Ankündigungspakets über einen Primärkanal an die zweite elektronische Vorrichtung, um der zweiten elektronischen Vorrichtung zu ermöglichen, eine E-UTRA Absolute Radio Frequency Channel Number (EARFCN) eines ersten Datenkanals und einen ersten Zeitversatz zu parsen und einen ersten Zeitpunkt für das Senden eines Hilfsankündigungspakets zu erhalten;
Senden, durch die erste elektronische Vorrichtung über den ersten Datenkanal, des Hilfsankündigungspakets an die zweite elektronische Vorrichtung zum ersten Zeitpunkt, um der zweiten elektronischen Vorrichtung zu ermöglichen, eine EARFCN eines zweiten Datenkanals und einen zweiten Zeitversatz zu parsen und einen zweiten Zeitpunkt für das Senden eines ersten periodischen Ankündigungssignals zu erhalten;
Öffnen, durch die zweite elektronische Vorrichtung, eines Empfangsfensters der zweiten elektronischen Vorrichtung basierend auf einem zweiten Zeitpunkt, um basierend auf dem ersten periodischen Ankündigungssignal eine erste Synchronisationsverbindung mit der ersten elektronischen Vorrichtung herzustellen; und
Empfangen (102), durch die erste elektronische Vorrichtung, eines zweiten periodischen Ankündigungssignals, das durch die zweite elektronische Vorrichtung gesendet wird, um eine zweite Synchronisationsverbindung der ersten elektronischen Vorrichtung mit der zweiten elektronischen Vorrichtung herzustellen.

2. Verfahren zur drahtlosen Kommunikation nach Anspruch 1, weiter umfassend:
Ankündigen (203), durch jede der ersten elektronischen Vorrichtung und der zweiten elektronischen Vorrichtung, eines Synchronisierungsbestätigungspakets an die jeweils andere Vorrichtung, um einen Bestätigungsprozess der ersten Synchronisierungsverbindung und der zweiten Synchronisierungsverbindung abzuschließen.

3. Verfahren zur drahtlosen Kommunikation nach Anspruch 2, weiter umfassend:
Ankündigen (204), durch die erste elektronische Vorrichtung, von Daten an der ersten Synchronisationsverbindung der zweiten elektronischen Vorrichtung, und Erhalten, über die zweite Synchronisationsverbindung der ersten elektronischen Vorrichtung, eines durch die zweite elektronischen Vorrichtung angekündigten Antwortsignals.

4. Verfahren zur drahtlosen Kommunikation nach Anspruch 1, weiter umfassend:
Aktualisierung (305) eines periodischen Ankündigungsintervalls der ersten Synchronisationsverbindung und der zweiten Synchronisationsverbindung.

5. Verfahren zur drahtlosen Kommunikation nach Anspruch 4, wobei das Aktualisieren (305) des periodischen Ankündigungsintervalls der ersten Synchronisationsverbindung und der zweiten Synchronisationsverbindung Folgendes umfasst:
Senden, durch die erste elektronische Vorrichtung über einen ersten periodischen Ankündigungskanal, eines Aktualisierungspakets an die erste Synchronisationsverbindung der zweiten elektronischen Vorrichtung, wobei das Aktualisierungspaket ein Zielintervall für die periodische Ankündigung, einen Zielzeitversatz und einen Multiplikator enthält;
Erhalten, durch die zweite Synchronisationsverbindung der ersten elektronischen Vorrichtung über einen zweiten periodischen Ankündigungskanal, eines Aktualisierungsbestätigungspakets von der ersten Synchronisationsverbindung der zweiten elektronischen Vorrichtung;
Senden, zu einem Zielzeitpunkt, von Daten an die erste Synchronisationsverbindung der zweiten elektronischen Vorrichtung basierend auf dem Zielintervall für die periodische Ankündigung, wobei der Zielzeitpunkt basierend auf dem Zielzeitversatz und dem Multiplikator erhalten wird; und
Erhalten, durch die zweite Synchronisationsverbindung der ersten elektronischen Vorrichtung über den zweiten periodischen Ankündigungskanal, eines entsprechenden Antwortsignals von der ersten Synchronisationsverbindung der zweiten elektronischen Vorrichtung.

6. Verfahren zur drahtlosen Kommunikation nach Anspruch 1, weiter umfassend:
Aktualisieren (306) einer Bitübertragungsschicht der ersten Synchronisationsverbindung und der zweiten Synchronisationsverbindung.

7. Verfahren zur drahtlosen Kommunikation nach Anspruch 6, wobei das Aktualisieren (306) der Bitübertragungsschicht der ersten Synchronisationsverbindung und der zweiten Synchronisationsverbindung Folgendes umfasst:
Senden, durch die erste elektronische Vorrichtung über einen ersten periodischen Ankündigungskanal, eines Bitübertragungsschicht-Aktualisierungspakets an die erste Synchronisationsverbindung der zweiten elektronischen Vorrichtung, wobei das Bitübertragungsschicht-Aktualisierungspaket eine Zielbitübertragungsschicht, einen Zielzeitversatz und einen Multiplikator enthält;
Erhalten, durch die zweite Synchronisationsverbindung der ersten elektronischen Vorrichtung über einen zweiten periodischen Ankündigungskanal, eines Aktualisierungsbestätigungspakets von der ersten Synchronisationsverbindung der zweiten elektronischen Vorrichtung;
Senden, zu einem Zielzeitpunkt, von Daten an die erste Synchronisationsverbindung der zweiten elektronischen Vorrichtung basierend auf der Zielbitübertragungsschicht, wobei der Zielzeitpunkt basierend auf dem Zielzeitversatz und dem Multiplikator erhalten wird; und
Erhalten, durch die zweite Synchronisationsverbindung der ersten elektronischen Vorrichtung über den zweiten periodischen Ankündigungskanal, eines entsprechenden Antwortsignals von der ersten Synchronisationsverbindung der zweiten elektronischen Vorrichtung.

8. Verfahren zur drahtlosen Kommunikation nach Anspruch 1, weiter umfassend:
Trennen (307) der ersten Synchronisationsverbindung und der zweiten Synchronisationsverbindung.

9. Verfahren zur drahtlosen Kommunikation nach Anspruch 8, wobei das Trennen (307) der ersten Synchronisationsverbindung und der zweiten Synchronisationsverbindung Folgendes umfasst:
Senden, durch die erste elektronische Vorrichtung über einen ersten periodischen Ankündigungskanal, eines Trennungsanforderungssignals an die erste Synchronisationsverbindung der zweiten elektronischen Vorrichtung, um die erste Synchronisationsverbindung der zweiten elektronischen Vorrichtung zu trennen; und
Erhalten, durch die zweite Synchronisationsverbindung der ersten elektronischen Vorrichtung über einen zweiten periodischen Ankündigungskanal, eines Trennungsbestätigungspakets von der ersten Synchronisationsverbindung der zweiten elektronischen Vorrichtung, und Trennen der zweiten Synchronisationsverbindung der ersten elektronischen Vorrichtung.

10. Drahtloses Kommunikationssystem, umfassend eine erste elektronische Vorrichtung und eine zweite elektronische Vorrichtung, wobei das drahtlose Kommunikationssystem so konfiguriert ist, dass es das Verfahren zur drahtlosen Kommunikation nach einem der Ansprüche 1 bis 9 durchführt.

11. Computerlesbares Speichermedium mit darauf gespeicherten Anweisungen, die, wenn sie von einem oder mehreren Prozessoren eines drahtlosen Kommunikationssystems umfassend eine erste elektronische Vorrichtung und eine zweite elektronische Vorrichtung, ausgeführt werden, das drahtlose Kommunikationssystem veranlassen, das Verfahren zur drahtlosen Kommunikation nach einem der Ansprüche 1 bis 9 durchzuführen.

## Revendications

1. Procédé de communication sans fil, appliqué dans un système de communication sans fil comprenant un premier dispositif électronique et un second dispositif électronique, le procédé comprenant :
la transmission, par le premier dispositif électronique via un canal principal, d'un paquet d'annonce de canal principal au second dispositif électronique, pour permettre au second dispositif électronique d'analyser un numéro de canal de fréquence radio absolu E-UTRA, EARFCN, d'un premier canal de données et d'un premier décalage temporel, et d'obtenir un premier point temporel pour transmettre un paquet d'annonce auxiliaire ;
la transmission, par le premier dispositif électronique via le premier canal de données, du paquet d'annonce auxiliaire au second dispositif électronique au premier point temporel, pour permettre au second dispositif électronique d'analyser un EARFCN d'un second canal de données et d'un second décalage temporel, et d'obtenir un second point temporel pour transmettre un premier signal d'annonce périodique ;
l'ouverture, par le second dispositif électronique, d'une fenêtre de réception du second dispositif électronique sur la base du second point temporel, pour établir une première connexion de liaison de synchronisation avec le premier dispositif électronique sur la base du premier signal d'annonce périodique ; et
la réception (102), par le premier dispositif électronique, d'un second signal d'annonce périodique transmis par le second dispositif électronique, pour établir une seconde liaison de synchronisation du premier dispositif électronique avec le second dispositif électronique.

2. Procédé de communication sans fil selon la revendication 1, comprenant en outre :
l'annonce (203), par chacun du premier dispositif électronique et du second dispositif électronique, d'un paquet de confirmation de synchronisation à l'autre, pour accomplir un processus de confirmation de la première liaison de synchronisation et de la seconde liaison de synchronisation.

3. Procédé de communication sans fil selon la revendication 2, comprenant en outre :
l'annonce (204), par le premier dispositif électronique, de données à la première liaison de synchronisation du second dispositif électronique, et l'obtention, par la seconde liaison de synchronisation du premier dispositif électronique, d'un signal de réponse annoncé par le second dispositif électronique.

4. Procédé de communication sans fil selon la revendication 1, comprenant en outre :
la mise à jour (305) d'un intervalle d'annonce périodique de la première liaison de synchronisation et de la seconde liaison de synchronisation.

5. Procédé de communication sans fil selon la revendication 4, dans lequel ladite mise à jour (305) de l'intervalle d'annonce périodique de la première liaison de synchronisation et de la seconde liaison de synchronisation comprend :
la transmission, par le premier dispositif électronique via un premier canal d'annonce périodique, d'un paquet de mise à jour à la première liaison de synchronisation du second dispositif électronique, le paquet de mise à jour comprenant un intervalle d'annonce périodique cible, un décalage temporel cible et un multiplicateur ;
l'obtention, par la seconde liaison de synchronisation du premier dispositif électronique via un second canal d'annonce périodique, d'un paquet de confirmation de mise à jour provenant de la première liaison de synchronisation du second dispositif électronique ;
la transmission, à un instant cible, de données à la première liaison de synchronisation du second dispositif électronique sur la base de l'intervalle d'annonce périodique cible, l'instant cible étant obtenu sur la base du décalage temporel cible et du multiplicateur ; et
l'obtention, par la seconde liaison de synchronisation du premier dispositif électronique via le second canal d'annonce périodique, d'un signal de réponse correspondant provenant de la première liaison de synchronisation du second dispositif électronique.

6. Procédé de communication sans fil selon la revendication 1, comprenant en outre :
la mise à jour (306) d'une couche physique de la première liaison de synchronisation et de la seconde liaison de synchronisation.

7. Procédé de communication sans fil selon la revendication 6, dans lequel ladite mise à jour (306) de la couche physique de la première liaison de synchronisation et de la seconde liaison de synchronisation comprend :
la transmission, par le premier dispositif électronique via un premier canal d'annonce périodique, d'un paquet de mise à jour de couche physique à la première liaison de synchronisation du second dispositif électronique, le paquet de mise à jour de couche physique comprenant une couche physique cible, un décalage temporel cible et un multiplicateur ;
l'obtention, par la seconde liaison de synchronisation du premier dispositif électronique via un second canal d'annonce périodique, d'un paquet de confirmation de mise à jour provenant de la première liaison de synchronisation du second dispositif électronique ;
la transmission, à un instant cible, de données à la première liaison de synchronisation du second dispositif électronique sur la base de la couche physique cible, l'instant cible étant obtenu sur la base du décalage temporel cible et du multiplicateur ; et
l'obtention, par la seconde liaison de synchronisation du premier dispositif électronique via le second canal d'annonce périodique, d'un signal de réponse correspondant provenant de la première liaison de synchronisation du second dispositif électronique.

8. Procédé de communication sans fil selon la revendication 1, comprenant en outre :
la déconnexion (307) de la première liaison de synchronisation et de la seconde liaison de synchronisation.

9. Procédé de communication sans fil selon la revendication 8, dans lequel ladite déconnexion (307) de la première liaison de synchronisation et de la seconde liaison de synchronisation comprend :
la transmission, par le premier dispositif électronique via un premier canal d'annonce périodique, d'un signal de demande de déconnexion à la première liaison de synchronisation du second dispositif électronique, pour déconnecter la première liaison de synchronisation du second dispositif électronique ; et
l'obtention, par la seconde liaison de synchronisation du premier dispositif électronique via un second canal d'annonce périodique, d'un paquet de confirmation de déconnexion de la première liaison de synchronisation du second dispositif électronique, et la déconnexion de la seconde liaison de synchronisation du premier dispositif électronique.

10. Système de communication sans fil, comprenant un premier dispositif électronique et un second dispositif électronique, dans lequel le système de communication sans fil est configuré pour réaliser le procédé de communication sans fil selon l'une quelconque des revendications 1 à 9.

11. Support de stockage lisible par ordinateur sur lequel sont stockées des instructions qui, lorsqu'elles sont exécutées par un ou plusieurs processeurs d'un système de communication sans fil comprenant un premier dispositif électronique et un second dispositif électronique, amènent le système de communication sans fil à réaliser le procédé de communication sans fil selon l'une quelconque des revendications 1 à 9.
